# FASCICULE DE BREVET EUROPEEN

(11) **EP 2 148 731 B1**
(45) Date de publication et mention de la délivrance du brevet: **20.10.2010**
(21) Numéro de dépôt: 08805540.5
(22) Date de dépôt: 05.05.2008
(51) Int. Cl.: A63F 13/02

(54) **DISPOSITIF POUR LA PRATIQUE DU FOOTBALL INTERACTIF UTILISANT UNE MANETTE DE JEU CONSTITUEE D'UN COUPLE D'UNITES DE CONTROLE**
VORRICHTUNG ZUM PRAKTIZIEREN VON INTERAKTIVEM FUSSBALLSPIEL MITTEL JOYSTICK MIT EINEM PAAR VON STEUERUNGSEINHEITEN
DEVICE FOR PRACTISING INTERACTIVE FOOTBALL USING A JOYSTICK COMPRISING A PAIR OF CONTROL UNITS

(30) Priorité: 04.05.2007 FR 0703227
(43) Date de publication de la demande: 03.02.2010
(73) Titulaire: Bigben Interactive, 59818 Lesquin (FR)
(72) Inventeur: NICOLAS, Frédéric, F-77250 Morêt-sur-Loing (FR); CLAUDEL, Frédéric, F-75010 Paris (FR)
(74) Mandataire: Vigand, Philippe
(86) Numéro de dépôt international: PCT/FR2008/000629
(87) Numéro de publication internationale: WO 2008/152230

(56) Documents cités:
- WO-A-2007/045765
- US-A- 5 280 922
- HTTP://WWW.PRIMETIMEAMUSEMENTS.COM: "Kick it Jr." [bande magnètique] 1997, GLOBAL VR , XP002504836 Extrait de l'Internet: URL:http://www.primetimeamusements.com/arc adegame.php?id=31> [extrait le 2008-11-19] le document en entier -& WWW.GAMEFAQS.COM: "Kick it Jr." [Online] 1997, GLOBAL VR , XP002504837 Extrait de l'Internet: URL:http://www.gamefaqs.com/coinop/arcade/ data/568048.html> [extrait le 2008-11-19] le document en entier

## Description

La présente invention se rapporte au domaine des dispositifs pour jeux virtuels, et plus particulièrement à un dispositif pour la pratique virtuelle et interactive de l'activité sportive de football (connue aussi sous le nom « soccer »).

Le but principal de l'invention est de permettre une pratique interactive inédite des jeux vidéo de football, par les nouvelles interactions que le dispositif selon l'invention rend possibles lorsqu'il est utilisé de façon complémentaire à une manette de jeu telle que celle décrite dans le brevet US2007072680 (NINTENDO - 2007).

La manette de jeu décrite dans ledit brevet US2007072680 est constituée d'un couple d'unités de contrôle, appelée dans ledit brevet première unité de contrôle/commande (« first control unit ») et deuxième unité de contrôle/commande (« second control unit »).

WO-2007/045765 décrit un dispositif pour la pratique de football interactif en association avec un système d'imagerie et de sons constituant le programme de football a suivre par un joueur, comportant un objet relativement fixé au sol, de forme sphérique dans lequel le joueur peut frapper du pied, et différents moyens permettant de déterminer le type des frappes pratiquées par le joueur ainsi que l'intensité de ces dernières.

Les jeux vidéo de football sont généralement complexes et généralement caractérisés par la gestion par le joueur :
- de footballeurs virtuels pris un par un successivement au sein d'une équipe,
- des déplacements desdits footballeurs à l'aide de boutons directionnels spécifiques,
- du choix d'un type de frappes de balle parmi généralement quatre grandes catégories de frappes, « passe courte », « passe en avant », « passe longue » et « tir »,
- de l'intensité de la frappe caractérisée par le temps durant lequel le signal déclenchant la frappe est envoyé (c'est-à-dire, dans le cas d'une manette de jeu, le temps pendant lequel le bouton déclenchant la frappe est maintenu pressé),
- de la prise en compte de la direction de la frappe généralement à l'aide d'un bouton directionnel et
- d'un certain nombre d'autres commandes déclenchant des variations de course, des feintes, des dribbles, des changements de stratégies des équipes, etc.

L'art antérieur connaît déjà des périphériques de jeux vidéo cherchant à augmenter les interactions ludiques et sportives pour un plus grand réalisme de la pratique d'activités virtuelles, y compris la pratique des jeux vidéo de football.

On a vu ainsi se développer des accessoires comme la manette constituée du couple d'unités de contrôle précédemment mentionné.

Il est important de décrire ce couple d'unités de contrôle afin de comprendre l'intérêt du dispositif selon l'invention.

La première unité de contrôle est munie notamment de boutons, à presser avec les doigts, et de capteurs sensibles aux accélérations auxquelles est soumise la première unité de contrôle.

A l'image de la première unité de contrôle, la deuxième unité de contrôle comprend des boutons, quoiqu'en nombre moins grand, ainsi que des capteurs sensibles aux accélérations.

L'utilisation de la première unité de contrôle et de la deuxième unité de contrôle comprend donc des actions de pressions avec les doigts sur des boutons, relativement communes aux manettes de jeu, ainsi que des actions plus originales comme des accélérations auxquelles on soumet l'une et/ou l'autre des unités de contrôle.

L'état des organes de commandes de la première unité de contrôle ainsi que l'état des organes de commande de la deuxième unité de contrôle sont transmis à un récepteur radio-fréquence connecté ou intégré à une unité de traitement numérique, notamment de type console de jeu, via un émetteur radio-fréquence situé dans la première unité de contrôle.

La deuxième unité de contrôle n'a pas d'émetteur radio-fréquence. La deuxième unité de contrôle s'utilise en couple avec la première unité de contrôle à laquelle elle se connecte via un cordon de connexion spécifique d'une longueur d'environ un mètre.

Les première et deuxième unités de contrôle permettent, notamment par l'utilisation des signaux issus de leurs capteurs sensibles aux accélérations, d'interagir avec des jeux vidéo en déplaçant plus ou moins vigoureusement lesdites unités de contrôle et donc en ayant une activité physique qui peut être proche de celle apparaissant virtuellement dans le jeu vidéo.

Il est important de noter que l'activité physique caractéristique des jeux de football, à savoir des frappes du pied dans une balle, n'est pas immédiatement transposable à la première unité de contrôle ou à la deuxième unité de contrôle, du fait que ces unités de contrôle ont été conçues pour se tenir à la main.

D'autre part, l'utilisation de la main pour contrôler au moins une de ces deux unités de contrôle, et donc la génération de nombreux signaux à l'aide des nombreux boutons de ces unités de contrôle reste indispensable en raison de la multiplicité des actions des jeux vidéo de football autres que les frappes dans la balle.

Dans la suite du document, nous utiliserons les termes « première unité de contrôle » et « deuxième unité de contrôle » pour désigner le couple d'unités de contrôle décrit dans le brevet US2007072680 indiqué supra et tous couples d'unités de contrôle ayant des caractéristiques similaires.

Il existe des accessoires, complémentaires à la première unité de contrôle, dont l'objet est d'accroître les sensations de jeu de l'utilisateur d'une première unité de contrôle, le plus souvent, et parfois d'une première unité de contrôle et d'une deuxième unité de contrôle.

De tels accessoires sont caractérisés en ce qu'ils sont munis d'une partie où l'on peut encastrer, insérer ou attacher une première unité de contrôle, qu'ils sont munis par eux-mêmes d'aucun organe de commande et que les signaux de jeu sont générés uniquement en agissant sur les organes de commande de la première unité de contrôle. De tels accessoires comportent peu ou pas de composants électroniques, ce qui leur permet d'avoir un coût de fabrication limité.

Par exemple, un de ces accessoires se présente comme une petite raquette de tennis en plastique ayant au niveau du manche un emplacement où l'on fixe la première unité de contrôle. En utilisant cet accessoire en complément de la première unité de contrôle pour jouer aux jeux vidéo de tennis, un utilisateur déclenche les signaux de la première unité de contrôle, et en particulier les signaux générés par les capteurs sensibles aux accélérations de la première unité de contrôle, en fouettant l'air avec un objet ressemblant à une raquette et donc en ayant davantage l'impression de pratiquer une activité proche du tennis. Il est important de noter que l'accessoire complémentaire à la première unité de contrôle ne déclenche par lui-même aucun signal au jeu et que lesdits signaux de jeu pourraient être générés en utilisant uniquement sur la première unité de contrôle.

Il existe de même des accessoires complémentaires pour les activités de golf, de course automobile, etc. mais aucun des accessoires existants complémentaires à la première unité de contrôle ne permet aujourd'hui la pratique du football comme le propose le dispositif selon l'invention. De plus, le dispositif selon l'invention s'adresse aux actions combinées des mains et des pieds alors que les accessoires existants ne s'adressent qu'aux actions des mains de l'utilisateur.

Le brevet FR0510780 (2005 - XKPAD) décrit un accessoire permettant la pratique interactive des jeux de football. Cet accessoire n'a pas été conçu pour être utilisé en complément d'autres manettes mais pour générer à lui seul l'ensemble des signaux des jeux vidéo de football. Il comporte de fait un grand nombre de composants électroniques. Son coût de fabrication est donc excessivement plus élevé que ce qui est attendu pour un accessoire complémentaire à un couple d'unités de contrôle. D'autre part, cet accessoire ne possède aucun élément permettant d'y accrocher, encastrer, attacher ou connecter une première unité de contrôle ou une deuxième unité de contrôle.

La présente invention vise à remédier aux lacunes de l'art antérieur par l'association originale de cinq éléments :
- un ballon élastiquement lié à un socle,
- un système d'attache, solidaire du ballon, et portant une unité de contrôle de type deuxième unité de contrôle ou première unité de contrôle ; ladite unité de contrôle pouvant être introduite, enserrée, encastrée ou attachée et être ainsi rendue solidaire des mouvements dudit système d'attache et donc dudit ballon,
- un système de raccordement permettant de relier entre elles la première unité de contrôle et la deuxième unité de contrôle sur une longueur supérieure à celle du cordon de la deuxième unité de contrôle,
- un tapis rattaché audit socle.

Le dispositif selon l'invention permet de réaliser une pratique virtuelle et interactive du football à l'aide des unités de contrôle et de jeux vidéo de football. En particulier, de tels jeux vidéo peuvent traduire par une frappe de balle virtuelle une frappe réelle dans le ballon par l'utilisateur, en tenant compte des signaux issus des capteurs sensibles à l'accélération de l'unité de contrôle rendue solidaire des mouvements du ballon.

D'autre part, des actions des jeux de football, comme les dribbles ou les pressings défensifs, pourront être déclenchées en pressant du pied sur le ballon afin d'incliner l'unité de contrôle solidaire des mouvements du ballon, ce qui activera de manière spécifique ses capteurs sensibles à l'accélération (dans ce cas, à une variation de l'accélération de la gravité terrestre telle que captée suivant leur axe).

Enfin, à l'aide du système de raccordement du dispositif selon l'invention, une première unité de contrôle ou une deuxième unité de contrôle pourra être solidaire du ballon du dispositif selon l'invention tout en étant reliée à l'autre unité de contrôle, la deuxième unité de contrôle ou la première unité de contrôle, qui pourra être tenue entre les mains de l'utilisateur afin d'envoyer par pression sur ses boutons, d'autres signaux de jeu que les frappes de pied, dribbles ou pressings défensifs.

Le dispositif selon l'invention comprend un ballon.

Selon un mode de réalisation préférentiel, ce ballon a des dimensions proches de celles d'un ballon de football.

Selon un mode de réalisation, ce ballon est un ballon en mousse.

Selon un mode de réalisation avec ballon en mousse, le revêtement extérieur du ballon est en plastique dur afin de donner au ballon une résistance suffisante aux coups de pied.

Selon un mode de réalisation avec ballon en mousse, le système d'attache est à l'intérieur du ballon. Selon ce mode de réalisation, le système d'attache peut être extrait ou replacé à l'intérieur du ballon par l'utilisateur, notamment lorsqu'il y attache la première unité de contrôle ou la deuxième unité de contrôle.

Selon un mode de réalisation préférentiel, le ballon est un ballon gonflé à l'air.

Selon ce mode de réalisation préférentiel, le système d'attache est fixé sur la surface extérieure du ballon, du côté opposé à la surface présentée aux frappes de pied de l'utilisateur. D'autre part, le système d'attache est à une distance suffisante du sommet du ballon afin de ne pas être écrasé par le pied du joueur au cas où ce dernier presse le ballon du pied de haut en bas.

Selon un mode de réalisation, la surface extérieure du ballon présente une empreinte en creux ayant la forme d'une des unités de contrôle, formant ainsi le système d'attache.

Le ballon du dispositif selon l'invention est fixé élastiquement à un socle.

Selon un mode de réalisation préférentiel, le mode de fixation du ballon au socle est réalisé à l'aide d'un prolongement cylindrique de la base du ballon dans le socle et fixé au socle à l'aide d'une goupille.

Selon un mode de réalisation préférentiel, le dessous du socle est démontable, ce qui permet de retirer la goupille et donc de changer le ballon au cas où il serait endommagé.

Selon un mode de réalisation préférentiel, le socle a une forme pyramidale écrasée conférant une bonne stabilité au socle et donc au ballon, tout en diminuant le risque que l'utilisateur frappe accidentellement le bord du socle en voulant frapper le ballon.

Le dispositif selon l'invention comprend un « système d'attache » solidaire des mouvements du ballon dans lequel une première unité de contrôle ou une deuxième unité de contrôle peut être introduite, attachée ou encastrée, afin de devenir solidaire des mouvements du système d'attache et donc des mouvements du ballon.

Les capteurs sensibles à l'accélération de l'unité de contrôle ainsi rendue solidaire du ballon par le système d'attache seront activés par les accélérations auxquelles sera soumis le ballon du fait des frappes de pied.

Selon un mode de réalisation, le système d'attache est une boîte dont l'intérieur en mousse est creusé d'une empreinte d'une unité de contrôle. Une fois cette boîte fermée, l'unité de contrôle est immobilisée à l'intérieur du fait de l'empreinte. Cette boîte possède une ouverture pour le système de raccordement du dispositif selon l'invention ou le cordon de l'unité de contrôle.

Selon un mode de réalisation, le système d'attache comprend deux mors de pince en plastique maintenant en place par la pression qu'ils exercent l'unité de contrôle que l'on enserre entre eux.

Selon un mode de réalisation, le système d'attache est constitué d'un fourreau dans lequel on peut glisser une unité de contrôle.

Selon un mode de réalisation, des bandes en tissus élastiques fermées à l'aide de Velcro ou d'une boucle peuvent être rabattues d'un côté à l'autre du système d'attache afin de renforcer l'attachement de l'unité de contrôle au système d'attache.

Selon un mode de réalisation préférentiel, le système d'attache est conçu selon les dimensions de la deuxième unité de contrôle. La première unité de contrôle, qui est l'unité de contrôle ayant le plus de boutons des deux, est alors dans les mains de l'utilisateur qui pourra ainsi activer les signaux des jeux de football autres que les frappes de balle, les dribbles ou les pressings défensifs.

Selon un mode de réalisation préférentiel, le système d'attache est conçu pour tenir la deuxième unité de contrôle à la surface du ballon, telle que le cordon de ladite unité de contrôle soit dirigé vers le socle du ballon.

Selon un mode de réalisation préférentiel, le système d'attache est fixé de manière à ce que les axes des capteurs sensibles à l'accélération de la deuxième unité de contrôle soient placés tels que l'un soit vertical. Il sera alors possible, en utilisant ce capteur comme un inclinomètre, de connaître le degré d'inclinaison du système d'attache et donc du ballon. Cette information pourra par exemple être utilisée pour générer des signaux de pressing défensif ou de dribble à partir du moment où le temps d'inclinaison du ballon sera supérieur au temps d'inclinaison généré normalement par une frappe.

Selon un mode de réalisation préférentiel, le système d'attache est fixé de manière à ce que les axes des capteurs sensibles à l'accélération de la deuxième unité de contrôle soient placés tels que deux de ces axes soient dans un plan horizontal. Les valeurs des capteurs donneront les composantes sur lesdits axes des vecteurs « accélération » auxquels la deuxième unité de contrôle, et donc le ballon de par leur solidarité de mouvements, seront soumis, notamment du fait de frappes du pied dans le ballon. Il sera alors possible de définir l'angle d'une frappe dans le ballon en étudiant les composantes du vecteur accélération. On pourra utiliser cet angle de frappe pour distinguer entre les différents types de tirs et passes dans le jeu. On pourra ainsi par exemple distinguer les frappes sur le côté du ballon des frappes sur le devant du ballon. D'autre part, le module vectoriel de l'accélération due à une frappe réelle du joueur dans le ballon, module calculé comme étant la racine carrée de la somme du carré des valeurs des capteurs sensibles à l'accélération de la deuxième unité de contrôle, pourra être transposé dans le jeu, par exemple en temps d'émission du signal de la frappe déterminée, pour définir l'intensité dudit tir ou de ladite frappe dans le jeu.

Selon un mode de réalisation, le système d'attache est rendu solidaire de la surface extérieure du ballon par collage.

Selon un mode de réalisation, le système d'attache est rendu solidaire de la surface extérieure du ballon par thermo-soudage.

Selon un mode de réalisation, le système d'attache est rendu solidaire de la surface extérieure du ballon par une bande ceinturant le ballon et passant par des anses pratiquées de part et d'autre du système d'attache.

Un système de raccordement permet de relier les unités de contrôle sur une distance supérieure à la longueur du cordon de la deuxième unité de contrôle.

Selon un mode de réalisation préférentiel, une prise dans laquelle peut se connecter le connecteur situé à l'extrémité du cordon de la deuxième unité de contrôle est située sur le socle. Cette prise est reliée à un câble passant dans le socle puis à l'intérieur du tapis, et enfin sortant du dit tapis, sur le côté. L'autre extrémité de ce câble est constituée par un connecteur pouvant se connecter à la prise située sur la première unité de contrôle. La longueur de ce câble est telle qu'un utilisateur peut se tenir debout devant le ballon du dispositif selon l'invention, à une distance lui permettant de frapper le ballon du pied, en ayant dans les mains la première unité de contrôle connectée au câble.

Selon ce mode préférentiel, la partie du câble qui est dans le tapis court à la périphérie du tapis, de façon à ne pas être située sous les zones du tapis sur lesquelles l'utilisateur est le plus susceptible de se tenir, afin de diminuer les écrasements dudit câble par l'utilisateur.

Selon ce mode préférentiel, le câble sort du tapis à la droite de l'utilisateur lorsque celui-ci fait face au ballon, de manière à ce que lorsque l'utilisateur tient la première unité de contrôle telle que la prise de la première unité de contrôle soit dirigée vers sa droite, ledit câble ne soit pas dans les chemins des trajectoires des frappes de pied de l'utilisateur. Tenir la première unité de contrôle de cette façon permet à l'utilisateur d'avoir à main gauche le bouton directionnel de la première unité de contrôle qui pourra être utilisé pour diriger les joueurs et indiquer les directions des balles, ce qui est l'utilisation traditionnelle d'un bouton directionnel des manettes de jeu classiques dans un jeu vidéo de football.

Ce système de raccordement permet de connecter les deux unités de contrôle entre elles, même si la distance entre la deuxième unité de contrôle et la première unité de contrôle est supérieure à la longueur du cordon de la deuxième unité de contrôle et de désolidariser les mouvements de la deuxième unité de contrôle reliée au ballon, des mouvements du câble reliant la première unité de contrôle afin d'éliminer au niveau des connecteurs les tensions pouvant résulter de mouvements contraires.

Les signaux générés par la deuxième unité de contrôle, du fait par exemple des frappes dans le ballon, peuvent ainsi être émis vers l'unité de traitement numérique, ou la console de jeux, via la première unité de contrôle. C'est aussi le cas des signaux de la première unité de contrôle et des combinaisons de signaux de la première unité de contrôle et de la deuxième unité de contrôle. Ce dispositif permet donc de générer un grand nombre de signaux qui peuvent être utilisés pour générer les nombreux signaux des jeux vidéo de football. Par exemple, la combinaison d'une pression sur un bouton de la première unité de contrôle et d'une frappe dans le ballon pourra générer certains types de signaux selon l'angle de frappe (« passe longue » ou « tir »), alors qu'en l'absence de pression sur le bouton de la première unité de contrôle, la même frappe pourra générer d'autres types de signaux selon l'angle de frappe (« passe courte » ou « passe en avant »).

Le dispositif selon l'invention comprend un tapis attaché au socle.

Selon un mode de réalisation préférentiel, ce tapis est présent du côté du ballon soumis aux frappes de pied de l'utilisateur, et d'une surface telle que ledit utilisateur ait son pied d'appui sur le tapis lorsqu'il frappe le ballon.

On comprendra mieux l'invention à l'aide de la description, faite ci-après à titre purement explicatif, d'un mode de réalisation de l'invention, en référence aux figures annexées :
- la Figure 1 représente le dispositif selon l'invention dans son ensemble sans les unités de contrôle,
- la Figure 2 représente le dispositif selon l'invention dans son ensemble avec les première et deuxième unités de contrôle,
- la Figure 3 représente le dispositif selon l'invention avec un utilisateur,
- la Figure 4 représente un système d'attache.

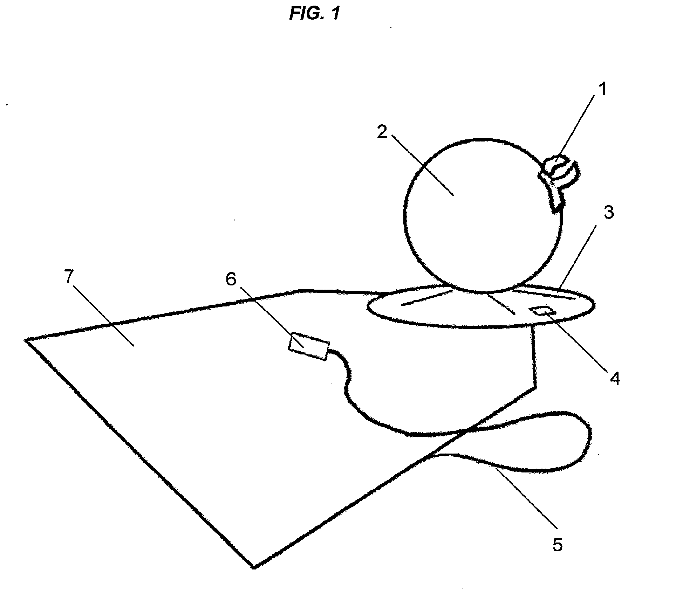

Suivant un mode de réalisation représentée en Figure 1, un système d'attache 1 servant à maintenir en place une deuxième unité de contrôle est collé à la surface d'un ballon 2. Ce ballon 2 est élastiquement lié à un socle 3 doté d'une prise 4 destinée à recevoir le connecteur du cordon de la deuxième unité de contrôle. Cette prise 4 est reliée au câble 5 dont l'extrémité 6 est un connecteur destiné à entrer dans la prise de la première unité de contrôle. Un tapis 7, attaché au socle 2, se trouve du côté opposé, relativement au ballon 2, au système d'attache 1 et donc à la deuxième unité de contrôle.

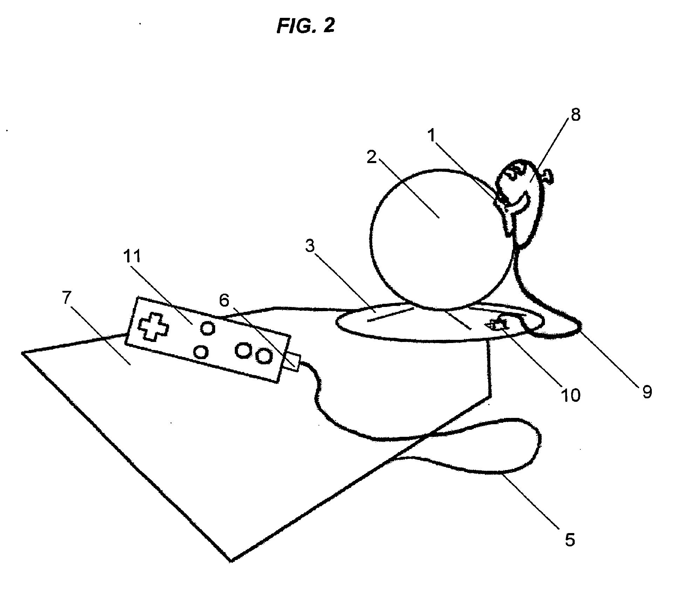

Sur la Figure 2, la deuxième unité de contrôle 8 est encastré dans le système d'attache 1 collé au ballon 2. Le cordon 9 de ladite deuxième unité de contrôle 8 est connecté par son extrémité 10 à la prise se trouvant dans le socle 3. Les signaux émis par la deuxième unité de contrôle 8 sont ainsi envoyés via le câble 5 et le connecteur 6 à la première unité de contrôle 11.

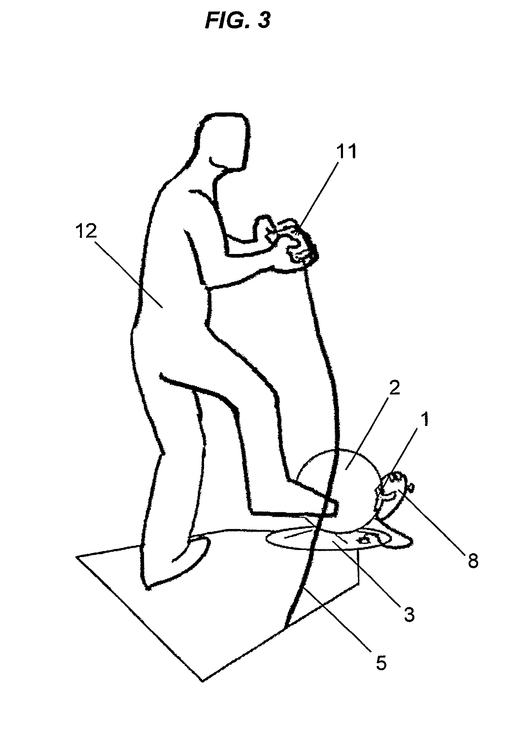

Sur la Figure 3, un utilisateur 12 tient dans ses mains la première unité de contrôle/commande 11 dont il active avec les doigts les boutons. Cet utilisateur frappe du pied dans le ballon 2 ce qui déplace le système d'attache 1, qui lui est solidaire, et donc la deuxième unité de contrôle/commande 8.

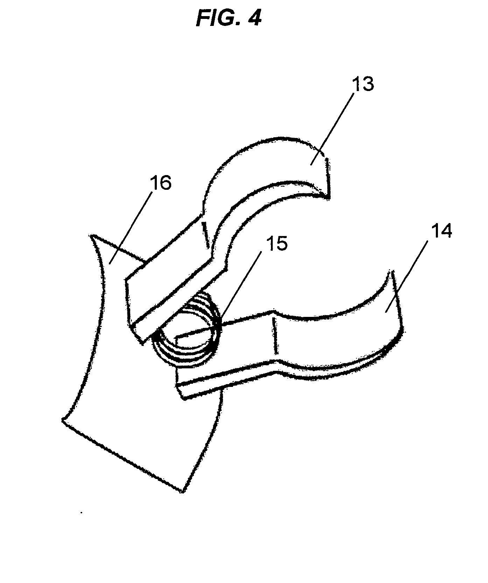

La Figure 4 illustre plus précisément un système d'attache. Il est constitué de mors de pinces 13 et 14, dont la fermeture est commandée par un ressort 15, selon le principe des charnières à ressort de fermeture. La forme des mors 13 et 14 est adaptée à la forme d'une deuxième unité de contrôle. Au repos, l'ouverture des mors est inférieure à la largeur d'une deuxième unité de contrôle. L'ouverture des mors (le ressort 15 est alors « en résistance ») peut être forcée de telle façon que l'on peut introduire entre eux la deuxième unité de contrôle. Du fait du ressort 15, les mors 13 et 14 vont alors exercer une pression sur la deuxième unité de contrôle engagée entre eux. Cette pression est telle que ladite deuxième unité de contrôle reste en place lorsque le système d'attache est soumis aux frappes dans le ballon. Les mors 13 et 14 et le ressort 15 sont disposés sur un support 16 dont la forme arrondie permet de le coller à la surface sphérique du ballon 2.

Le dispositif selon l'invention permet donc d'utiliser des manettes constituées d'un couple d'unités de contrôle de type première unité de contrôle et deuxième unité de contrôle de manière originale pour jouer aux jeux vidéo de football dans une logique de réalité augmentée.

Un avantage du dispositif selon l'invention est qu'il permet par une utilisation originale des unités de contrôle de type première unité de contrôle et deuxième unité de contrôle, de frapper réellement une balle du pied pour générer les signaux du jeu de football, ce qui accroît les sensations du jeu virtuel.

Un autre avantage du dispositif selon l'invention est qu'il ne contient aucune partie électronique complexe, ce qui lui permet d'avoir un coût de fabrication très peu élevé.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif pour la pratique virtuelle et interactive des jeux vidéo de football, complémentaire aux manettes de jeu constituées d'un couple d'unités de contrôle telles que la première unité de contrôle (11) comprend une unité de transmission et des capteurs de mouvement et que la deuxième unité de contrôle (8) comprend des capteurs de mouvement et un cordon la reliant à la première unité de contrôle, comportant :
- un ballon (2) élastiquement lié à un socle (3),
- un système d'attache (1), solidaire du ballon (2) et portant l'une desdites unités de contrôle
- un système de raccordement (5) reliant entre elles lesdites unités de contrôle sur une longueur supérieure à celle de leur cordon de connexion (9),
- un tapis (7) rattaché audit socle,
de telle sorte que les signaux des capteurs de mouvement de l'unité de contrôle portée par le ballon permettent de déclencher les actions de tirs et de passes dans le jeu et d'en évaluer l'intensité.

2. Dispositif selon la revendication 1, **caractérisé en ce que** le système d'attache est placé à l'intérieur du ballon.

3. Dispositif selon la revendication 1, **caractérisé en ce que** le système d'attache est collé ou thermo-soudé à la surface du ballon à un endroit où l'unité de contrôle qui y est placée ne puisse pas être écrasée ou frappée par les actions de pression sur le ballon ou de frappe dans le ballon de l'utilisateur.

4. Dispositif selon les revendications 2 ou 3, **caractérisé en ce que** le système d'attache est constitué de mors de pince (13) et (14) tenus fermés par un ressort de fermeture (15) tel qu'une desdites unités de contrôle est tenue en place lorsqu'elle est enserrée entre lesdits mors.

5. Dispositif selon les revendications 2 ou 3, **caractérisé en ce que** le système d'attache est constitué par un fourreau adapté aux dimensions d'une desdites unités de contrôle.

6. Dispositif selon les revendications 2 ou 3, **caractérisé en ce que** le système d'attache est constitué par un boîtier à l'intérieur duquel on peut enfermer une desdites unités de contrôle et laissant une ouverture au système de raccordement.

7. Dispositif selon les revendications 2 ou 3, **caractérisé en ce que** le système d'attache est constitué par une empreinte dans le ballon de la forme d'une desdites unités de contrôle.

8. Dispositif selon l'une quelconque des revendications précédentes, **caractérisé en ce que** le système de raccordement désolidarise les mouvements des deux unités de contrôle **en ce qu'**il est composé d'une prise (10) dans laquelle on connecte le connecteur situé à l'extrémité du cordon de connexion (9) issu de la deuxième unité de contrôle (8), prise reliée à un câble (5) dont l'extrémité est constituée d'un connecteur (6) se connectant à la prise de la première unité de contrôle (11).

## Claims

1. A device for the virtual and interactive practice of football video games, complementary to game joysticks constituted by a couple of control units such that the first control unit (11) comprises transmission unit and motion sensors and that the second control unit (8) comprises motion sensors and a cord connecting it to the first control unit, comprising :
- a ball (2) elastically connected to a plinth (3),
- an attachment system (1), integral with the ball (2) and bearing one of said control units
- a connecting system (5) interconnecting said control units over a length greater than that of their connection cord (9),
- a mat (7) attached to said plinth, such that the signals of the motion sensors of the control unit carried by the ball trigger the actions of shots and passes in the game and evaluate the intensity thereof.

2. The device as claimed in Claim 1, **characterised in that** the attachment system is placed inside the ball.

3. The device as claimed in Claim 1, **characterised in that** the attachment system is stuck or thermo-welded to the surface of the ball at a place where the control unit placed there cannot be crushed or struck by the actions of pressure on the ball or of strike in the ball of the user.

4. The device as claimed in Claims 2 or 3, **characterised in that** the attachment system is constituted by clamps (13) and (14) kept closed by a closing spring (15) such as one of said control units is held in place when clamped between said clamps.

5. The device as claimed in Claims 2 or 3, **characterised in that** the attachment system is constituted by a sheath adapted to the dimensions of one of said control units.

6. The device as claimed in Claims 2 or 3, **characterised in that** the attachment system is constituted by a casing which can house one of said control units and leaving an opening to the connecting system.

7. The device as claimed in Claims 2 or 3, **characterised in that** the attachment system is constituted by an imprint in the ball of the form of one of said control units.

8. The device as claimed in any one of the preceding claims, **characterised in that** the connecting system detaches the movements of the two control units **in that** it comprises an outlet (10) in which the connector located at the end of the connection cord (9) originating from the second control unit (8) is connected, outlet connected to a cable (5) whereof the end is constituted by a connector (6) connecting to the outlet of the first control unit (11).

## Patentansprüche

1. Vorrichtung für das virtuelle und interaktive Ausüben von Fußballspielvideos, die komplementär zu Joysticks ist, die von einem Steuereinheitenpaar derart gebildet werden, dass die erste Steuereinheit (11) eine Übertragungseinheit und Bewegungssensoren umfasst und dass die zweite Steuereinheit (8) Bewegungssensoren und ein Kabel umfasst, das sie mit der ersten Steuereinheit verbindet, die umfasst:
- einen elastisch mit einem Sockel (3) verbundenen Ball (2),
- ein Befestigungssystem (1), das mit dem Ball (2) verbunden ist und eine der Steuereinheiten trägt,
- ein Anschlusssystem (5), das die Steuereinheiten miteinander verbindet über eine Länge, die länger ist als die Länge ihres Verbindungskabels (9),
- eine Matte (7), die derart mit dem Sockel verbunden ist, dass die Signale der Bewegungssensoren der vom Ball getragenen Steuereinheit erlauben, Schuss- und Passaktionen im Spiel auszulösen und deren Intensität zu bewerten.

2. Vorrichtung nach Anspruch 1, **dadurch gekennzeichnet, dass** das Befestigungssystem im Ball platziert ist.

3. Vorrichtung nach Anspruch 1, **dadurch gekennzeichnet, dass** das Befestigungssystem auf die Oberfläche des Balls an einer Stelle aufgeklebt oder thermogeschweißt ist, wo die Steuereinheit, die dort platziert ist, nicht von den Druckaktionen auf den Ball oder Schlagaktionen in den Ball des Benutzers beschädigt oder getroffen werden kann.

4. Vorrichtung nach den Ansprüchen 2 oder 3, **dadurch gekennzeichnet, dass** das Befestigungssystem von Klemmbacken (13) und (14) gebildet wird, die von einer Schließfeder (15) derart geschlossen gehalten werden, dass eine der Steuereinheiten am Platz gehalten wird, wenn sie zwischen den Backen eingeschlossen ist.

5. Vorrichtung nach den Ansprüchen 2 oder 3, **dadurch gekennzeichnet, dass** das Befestigungssystem von einer Hülle gebildet wird, die an die Abmessungen einer der Steuereinheiten angepasst ist.

6. Vorrichtung nach den Ansprüchen 2 oder 3, **dadurch gekennzeichnet, dass** das Befestigungssystem von einem Gehäuse gebildet wird, in das eine der Steuereinheiten eingeschlossen werden kann und das eine Öffnung für das Anschlusssystem lässt.

7. Vorrichtung nach den Ansprüchen 2 oder 3, **dadurch gekennzeichnet, dass** das Befestigungssystem von einer Prägung in den Ball in der Form einer der Steuereinheiten gebildet wird.

8. Vorrichtung nach einem der vorangehenden Ansprüche, **dadurch gekennzeichnet, dass** das Befestigungssystem die Bewegungen der zwei Steuereinheiten trennt, **dadurch**, dass es aus einer Steckdose (10) besteht, in die der Stecker gesteckt wird, der sich am Ende des Verbindungskabels (9) befindet, das von der zweiten Steuereinheit (8) ausgeht, wobei die Steckdose (10) mit einem Kabel (5) verbunden ist, dessen Ende von einem Stecker (6) gebildet wird, der in die Steckdose der ersten Steuereinheit (11) gesteckt wird.
